# FASCICULE DE BREVET EUROPEEN

(11) **EP 1 383 638 B1**
(45) Date de publication et mention de la délivrance du brevet: **22.03.2006**
(21) Numéro de dépôt: 02732839.2
(22) Date de dépôt: 25.04.2002
(51) Int. Cl.: B29C 65/52, B32B 3/12

(54) **PROCEDE ET DISPOSITIF DE DEPOT DE COLLE SUR UNE SURFACE ALVEOLEE**
VERFAHREN UND VORRICHTUNG ZUM AUFTRAGEN VON KLEBSTOFF AUF EINE ZELLFÖRMIGE OBERFLÄCHE
METHOD AND DEVICE FOR DEPOSITING ADHESIVE ON AN ALVEOLAR SURFACE

(30) Priorité: 02.05.2001 FR 0105868
(43) Date de publication de la demande: 28.01.2004
(73) Titulaire: AIRBUS France, 31060 Toulouse Cedex 03 (FR)
(72) Inventeur: COLIN, Bernard, F-44100 NANTES (FR); DE MATTIA, Denis, F-44115 BASSE-GOULAINE (FR)
(74) Mandataire: Poulin, Gérard
(86) Numéro de dépôt international: PCT/FR2002/001426
(87) Numéro de publication internationale: WO 2002/087855

(56) Documents cités:
- EP-A- 0 439 352
- GB-A- 2 104 839
- US-A- 3 656 992
- US-A- 4 249 974

## Description

### Domaine technique

L'invention concerne un procédé permettant de répartir de la colle préalablement déposée sur une surface alvéolée d'un matériau alvéolé à cellules tubulaires, sans obstruer les cellules débouchant sur cette surface.

L'invention concerne également un dispositif mettant en oeuvre ce procédé.

Le procédé et le dispositif selon l'invention s'appliquent avantageusement à la fabrication de panneaux sandwich comprenant une âme alvéolée, telle qu'une structure en nid d'abeilles, présentant deux faces opposées sur lesquelles sont collées des parois formant le revêtement extérieur du panneau. De tels panneaux sont utilisés dans de nombreux domaines, parmi lesquels on citera notamment les industries aéronautique et spatiale.

### Etat de la technique

Les panneaux sandwich sont généralement assemblés par collage. Dans ce cas, une méthode connue consiste à déposer un film d'adhésif sur toute la surface des deux faces de l'âme alvéolée. Les parois sont ensuite collées sur lesdites faces, par contact avec ce film d'adhésif. Si nécessaire, une opération de polymérisation de la colle est ensuite mise en oeuvre.

Toutefois, cette méthode connue présente des inconvénients. En effet, la colle recouvre alors en totalité les deux surfaces de l'âme alvéolée, y compris les parties creuses des cellules. Cela interdit d'utiliser cette méthode lorsque l'une au moins des parois du panneau doit demeurer poreuse après la phase de collage.

Pour s'affranchir de ce problème, différentes solutions ont été élaborées. Toutes ces solutions visent à ne laisser subsister la colle que sur les extrémités des cloisons des cellules.

Une première technique connue est proposée par la société MacKAY Industries, Inc., USA. Elle consiste à chauffer, au moyen d'un flux d'air chaud, un film d'adhésif déposé préalablement sur l'une des faces de l'âme alvéolée. Lorsqu'une certaine température est atteinte, la colle se fluidifie et migre sur les extrémités des cloisons des cellules, pour y former un bourrelet de colle.

Cette technique connue présente plusieurs inconvénients. Ainsi, elle ne peut être utilisée de façon satisfaisante que sur une seule face de l'âme alvéolée, car elle nécessite que les cellules soient ouvertes à leur extrémité opposée. En effet, si les cellules sont fermées, le flux d'air chaud qui chauffe le film de colle chauffe aussi l'air contenu dans les cellules, de sorte que celui-ci se dilate et provoque une contre pression s'opposant à l'action mécanique du flux d'air chaud. Par conséquent, le bourrelet de colle n'est pas homogène et de la colle peut être projetée à l'intérieur des cellules. Cela se traduit parfois par un bourrelet de colle incomplet et par un risque d'obturation d'une paroi poreuse rapportée par la suite sur l'âme alvéolée, du fait d'un écoulement ultérieur de la colle le long des cloisons des cellules, lors de la polymérisation finale.

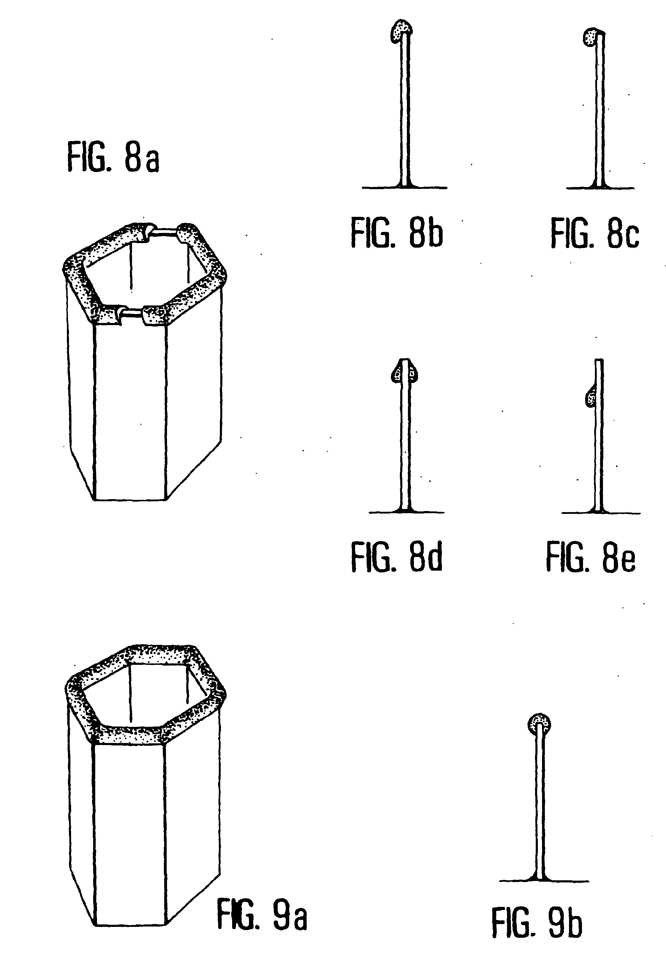

Les figures 8a, 8b, 8c, 8d et 8e des dessins annexés illustrent schématiquement les cas d'un bourrelet de colle incomplet (figure 8a) et de bourrelets incorrects (figures 8b à 8e) susceptibles d'être obtenus par ce procédé connu. A titre de comparaison, on a représenté sur les figures 9a et 9b, respectivement en perspective et en coupe, un bourrelet de colle régulier et uniforme, apte à garantir l'assemblage correct d'un panneau sandwich.

Une autre technique connue est décrite dans le document US-A-5 944 935. Dans ce cas, on recouvre d'un écran poreux les films de colle préalablement déposés sur chacune des faces de l'âme alvéolée. L'ensemble est ensuite pressé et chauffé. Sous les effets combinés de la température et de la pression, les films de colle se fluidifient et migrent dans la structure poreuse des écrans au droit des cellules, tout en laissant un dépôt de colle sur les extrémités des cloisons des cellules. La colle est ensuite refroidie au moyen d'un cylindre réfrigérant et l'écran est retiré progressivement en laissant subsister les bourrelets de colle sur les extrémités des cloisons des cellules.

Cette autre technique connue présente, elle aussi, plusieurs inconvénients. Tout d'abord, elle est longue et complexe à mettre en oeuvre, car elle comporte de nombreuses opérations supplémentaires par rapport aux autres méthodes connues de collage (mise en place des écrans poreux, mise sous pression, refroidissement, enlèvement des écrans, etc.). Par ailleurs, cette technique est plus coûteuse que les autres méthodes connues car elle nécessite davantage de colle. En effet, un film de colle plus épais est nécessaire du fait qu'une grande partie de la colle est enlevée avec les écrans poreux. De plus, cela induit une quantité importante de déchets (colle et écrans), ce qui pose des problèmes vis-à-vis de l'environnement. En outre, comme dans la technique précédente, le chauffage de l'âme alvéolée peut engendrer des déformations de celle-ci, notamment dans le cas de formes complexes. Enfin, cette technique semble difficilement applicable à des surfaces non planes, par exemple de forme sphérique concave ou convexe.

Le document EP 0 439 352 décrit un procédé conforme au préambule de la revendication 1 et le document US 4 249 974 décrit un dispositif conforme au préambule de la revendication 7.

Par ailleurs, le document US 3 656 992 propose un procédé pour revêtir d'un film adhésif perforé les faces d'une âme en nids d'abeilles afin de former des ménisques de colle sur les bords des parois de celle-ci lors du chauffage de la colle.

### Exposé de l'invention

L'invention a précisément pour objet un procédé permettant d'obtenir un bourrelet de colle régulier et homogène, adapté aux performances souhaitées, sur les extrémités des cloisons des cellules ouvertes ou fermées d'une surface alvéolée, quelle que soit la forme de ladite surface, c'est-à-dire aussi bien sur une surface alvéolée de forme simple que sur une surface de forme complexe, telle qu'une surface non réglée et/ou non développable.

A cet effet, il est proposé un procédé selon la revendication 1.

L'expression "sans déclencher sensiblement sa polymérisation" couvre le cas où la polymérisation est légèrement amorcée, afin d'éviter un écoulement de la colle lors du collage ultérieur et de garantir les performances mécaniques de l'assemblage collé. Cette pré-polymérisation peut notamment être envisagée lorsque la colle utilisée présente une faible viscosité.

Ce procédé permet de chauffer sélectivement et uniquement la colle, jusqu'à une température suffisante pour la faire fluer et migrer en formant un bourrelet sur les extrémités des cloisons des cellules et, si nécessaire (en fonction des caractéristiques de viscosité, de mouillage, etc.), pré-polymériser. Il peut être utilisé indifféremment sur des surfaces alvéolées de forme quelconque, même si celle-ci est complexe.

Avantageusement, on expose le film de colle à la source alors que la surface de la structure alvéolée est tournée vers le haut, de préférence en maintenant les cloisons des cellules sensiblement verticales. Cet agencement permet de s'assurer que le bourrelet de colle se forme aussi uniformément que possible de part et d'autre des extrémités des cloisons des cellules.

L'invention a aussi pour objet un dispositif selon la revendication 7.

Selon un premier mode de réalisation de l'invention, la source est fixe et le support de la structure alvéolée apte à se déplacer pour faire défiler la surface de la structure alvéolée devant la source avec un écartement sensiblement constant.

Selon un deuxième mode de réalisation de l'invention, le support est fixe et la source électromagnétique apte à se déplacer parallèlement à la surface de la structure alvéolée.

Selon un troisième mode de réalisation de l'invention, appliqué au cas où la surface de la structure alvéolée est non plane, le support est orientable et la source apte à se déplacer en face de ladite surface selon une trajectoire présentant un écartement sensiblement constant par rapport à celle-ci.

Dans les différents modes de réalisation de l'invention, la source est avantageusement apte à se déplacer selon une direction sensiblement normale à la surface de la structure alvéolée. Cela permet de garantir l'homogénéité de l'exposition aux rayonnements émis par la source sur toute la surface de la structure alvéolée.

Dans un but comparable, des écrans amont et aval peuvent être associés à la source, de façon à limiter la dispersion du flux émis par celle-ci. Ces écrans peuvent être réflectifs ou non réflectifs.

Afin de mesurer avec précision la température atteinte par le film de colle sur la structure alvéolée, le support comprend avantageusement au moins une partie latérale lisse, c'est-à-dire dépourvue de structure alvéolée, apte à recevoir directement un film de colle témoin identique au film de colle placé sur ladite structure. Des moyens de mesure de température sont alors placés en face de ladite partie latérale lisse.

Dans ce cas, un ruban adhésif résistant à la température est placé avantageusement sur la partie latérale lisse, pour recevoir le film de colle témoin. L'enlèvement du ruban adhésif à la fin de l'opération permet de garder une trace des conditions de mise en oeuvre.

### Brève description des dessins

On décrira à présent, à titre d'exemples non limitatifs, différents modes de réalisation de l'invention, en se référant aux dessins annexés, dans lesquels :
- la figure 1 est une vue en perspective, avec arrachement partiel, qui représente un panneau sandwich obtenu par la mise en oeuvre du procédé selon l'invention ;
- la figure 2 est une vue de côté qui représente schématiquement un premier mode de réalisation d'un dispositif conforme à l'invention ;
- la figure 3 est une vue comparable à la figure 2, qui représente schématiquement un deuxième mode de réalisation de l'invention ;
- la figure 4 est une vue comparable aux figures 2 et 3, qui représente schématiquement un troisième mode de réalisation de l'invention ;
- la figure 5 est une vue comparable aux figures 2 à 4, qui représente schématiquement une variante du mode de réalisation de la figure 2 ;
- la figure 6 est une vue en perspective qui illustre schématiquement l'implantation d'un système de mesure de température sur le dispositif de la figure 2;
- la figure 7 est une vue en perspective qui représente plus en détail un dispositif comparable à celui qui est illustré sur la figure 5, appliqué au traitement d'une structure de forme complexe ;
- les figures 8a, 8b, 8c, 8d et 8e, déjà décrites, sont des vues en perspective (figure 8a) et en coupe (figures 8b, 8c, 8d et 8e) qui représentent des bourrelets de colle défectueux obtenus par des procédés de l'art antérieur ;
- les figures 9a et 9b sont des vues, respectivement en perspective et en coupe, qui représentent des bourrelets de colle réguliers et homogènes obtenus conformément à l'invention ; et
- la figure 10 est une vue de dessus qui illustre schématiquement un perfectionnement de l'invention, selon lequel on utilise un film adhésif perforé en association avec une structure alvéolée dont les alvéoles forment, dans ce cas particulier, un réseau hexagonal régulier.

### Description détaillée de plusieurs modes de réalisation préférés de l'invention

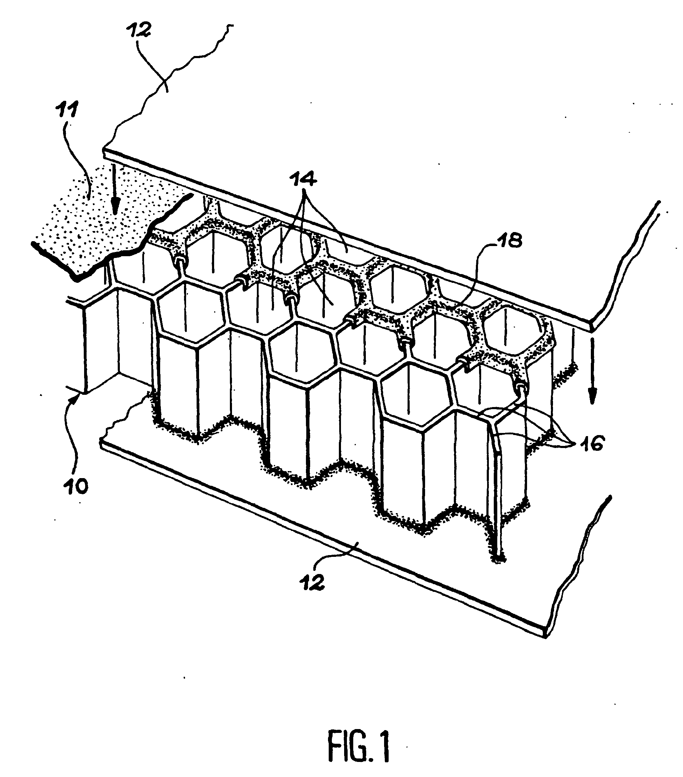

Comme l'illustre schématiquement la figure 1, un panneau sandwich susceptible d'être réalisé par le procédé conforme à l'invention comprend généralement une structure alvéolée 10, formant l'âme du panneau, ainsi que deux parois 12 rapportées par collage sur chacune des faces de la structure 10.

La structure alvéolée 10 se présente sous la forme d'une plaque qui peut être plane ou non plane, à faces parallèles ou non, sans sortir du cadre de l'invention. Cette structure comprend un grand nombre de cellules 14 séparées les unes des autres par des cloisons 16. Le plus souvent, les cloisons 16 sont orientées perpendiculairement aux deux faces de la structure 10 et les cellules 14 traversent celle-ci de part en part, de façon à déboucher sur chacune desdites faces. Toutefois, cet agencement ne doit pas être considéré comme limitatif de la portée de l'invention. En effet, celle-ci s'applique également aux cas d'une structure alvéolée dont les cloisons 16 ne sont pas perpendiculaires aux faces de la structure et où les cellules 14 ne débouchent que sur l'une desdites faces.

Comme l'illustre schématiquement la figure 1, la structure alvéolée 10 se présente généralement sous la forme d'une structure dite "en nid d'abeilles" dont les cellules ont une section hexagonale. Cependant, les cellules de la structure 10 pourraient présenter une section différente, par exemple carrée ou triangulaire, sans sortir du cadre de l'invention.

La ou les parois 12 qui revêtent au moins l'une des faces de la structure alvéolée 10 peuvent être de nature quelconque et présenter une structure poreuse ou non poreuse, selon l'application envisagée. Chaque paroi 12 peut notamment être constituée par une plaque métallique mince ou par une superposition de plusieurs couches de fibres tissées ou non tissées, imprégnées de résine, selon un agencement bien connu de l'homme du métier.

Conformément à l'invention, chaque paroi 12 est rapportée sur la face correspondante de la structure alvéolée 10 par collage. Plus précisément, on dépose tout d'abord sur ladite face un film de colle 11 qui se présente alors sous la forme d'une feuille souple présentant une adhérence nulle ou relativement faible à température ambiante. Grâce au procédé selon l'invention, ce film de colle 11 est chauffé de façon telle que la colle flue et migre, sans polymériser de façon sensible, sur les extrémités des cloisons 16 matérialisant la surface de la structure alvéolée 10. La colle forme ainsi un bourrelet 18 sur les extrémités des cloisons 16. La paroi 12 est ensuite placée sur la surface de la face considérée de la structure 10, pour y être collée lors d'une étape de polymérisation ultérieure. Cette étape de polymérisation est bien connue de l'homme du métier, de sorte qu'il n'en sera fait aucune description.

Le procédé selon l'invention concerne plus précisément l'étape de chauffage du film de colle 11, permettant d'obtenir le bourrelet de colle 18 sur les extrémités des cloisons 16 matérialisant la face correspondante de la structure 10.

Selon ce procédé, on chauffe le film de colle 11 par rayonnement, au moyen d'une source de puissance adaptée, de façon à ne chauffer sélectivement que la colle. Celle-ci est choisie auparavant pour satisfaire aux caractéristiques mécaniques, physiques, chimiques, etc. requises pour l'application envisagée. Au moins la majeure partie de l'énergie rayonnée par la source est absorbée par la colle, sans être absorbée de façon significative par la structure alvéolée.

Du fait que les caractéristiques de la source sont choisies en fonction de celles de la colle pour satisfaire aux conditions qui viennent d'être exposées, la source ne chauffe pratiquement que la colle. On évite ainsi, en particulier, de chauffer les cloisons 16 des cellules 14 et l'air que celles-ci contiennent. De plus, l'inertie thermique est très faible. Il n'existe donc pratiquement aucun risque pour que de la colle soit projetée à l'intérieur des cellules ou pour que le bourrelet 18 soit incomplet.

A titre d'exemple nullement limitatif de la portée de l'invention, pour une colle de type époxyde thermodurcissable on peut notamment utiliser une source émettant dans l'infrarouge.

Lors de la mise en oeuvre du procédé selon l'invention, on détermine la puissance de la source, la distance qui la sépare de la surface de la structure alvéolée et la durée d'exposition en fonction de la réactivité de la colle, pour que la température atteinte par celle-ci assure son fluage, tout en n'amorçant pas la polymérisation de façon sensible. Ainsi, la colle peut fluer et migrer, sous l'effet des forces de capillarité, pour former le bourrelet 18, sans échauffement notable de la structure alvéolée 10, puisque c'est essentiellement la colle qui est chauffée par le rayonnement de la source. Le couple durée d'exposition/température est donc défini en fonction des caractéristiques rhéologiques et de la cinétique de polymérisation de la colle.

En plus du risque de début de polymérisation de la colle engendré par l'adoption d'une température de fluage trop élevée, une telle température excessive peut aussi provoquer des écoulements de colle le long des cloisons des alvéoles et conséquemment un manque de colle là où il est souhaité qu'elle soit disposée. Des essais préalables permettent, dans chaque cas particulier, d'optimiser les paramètres d'exposition de la colle.

Afin de contrôler en temps réel les conditions de formation des bourrelets de colle aux extrémités des alvéoles, on asservit différents paramètres tels que la vitesse de déplacement relatif entre la source et la structure alvéolée (c'est-à-dire la durée d'exposition du film de colle), la distance entre la source et la structure et la puissance de la source.

La température de la colle, mesurée par exemple au moyen de pyromètres optiques, est ainsi maintenue automatiquement à une valeur suffisante pour que la colle flue et migre, mais insuffisante pour entraîner une polymérisation trop avancée de la colle. La température peut être contrôlée en agissant sur la puissance de la source et/ou sur sa distance moyenne par rapport au film de colle. La vitesse de défilement est contrôlée, quant à elle, afin que la durée d'exposition soit suffisante pour permettre à la colle de fluer et migrer en forme de bourrelet, mais aussi suffisamment courte pour ne pas déclencher notablement le processus de polymérisation.

Pour que le fluage ait lieu dans des conditions optimales propres à garantir la formation d'un bourrelet 18 homogène, c'est-à-dire symétrique ou sensiblement symétrique par rapport aux plans des cloisons 16 (figure 9b), on expose le film de colle 11 à la source alors que la face correspondante de la structure alvéolée 10 est tournée vers le haut. De plus, on oriente ladite structure de façon que les cloisons 16 des cellules 14 soient sensiblement verticales au moins dans la partie de la structure alvéolée 10 située en face de la source lorsque ladite structure n'est pas plane. Grâce à cet agencement, qui conduit à orienter la direction du rayonnement de la source normalement à la surface de la pièce, on obtient une efficacité optimale d'absorption du rayonnement émis par la source.

Le procédé selon l'invention présente de nombreux avantages. Ainsi, du fait que la structure alvéolée n'est pas chauffée, elle ne risque pas de se déformer. La colle peut donc être déposée sur des structures qui peuvent être de forme complexe. De plus, du fait que l'air contenu dans les alvéoles n'est pas chauffé, il ne se dilate pas. Il n'y a donc aucun risque d'éclatement du film de colle 11 et de projection de colle, même si les cellules sont fermées sur l'autre face de la structure. En outre, l'absence d'action mécanique directe du dispositif sur la pièce en cours de fabrication permet d'éviter la création d'effets parasites tels que des déformations de la pièce, une pollution ou des altérations de sa surface, etc.. De surcroît, le procédé est facile à mettre en oeuvre et autorise des gains de temps importants par rapport aux procédés de l'art antérieur. Il n'engendre pas de rejets et n'utilise que la quantité de colle strictement nécessaire. Enfin, le procédé selon l'invention peut être utilisé successivement sur les deux faces d'une structure alvéolée.

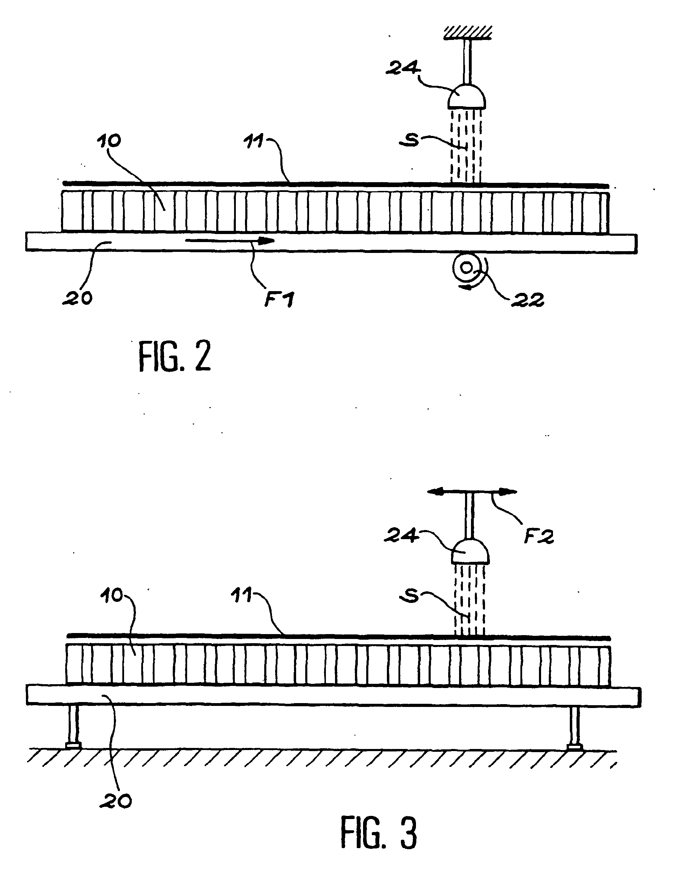

Différents modes de réalisation de dispositifs conçus pour mettre en oeuvre le procédé qui vient d'être décrit vont à présent être présentés brièvement, en se référant successivement aux figures 2 à 7.

Sur la figure 2, on a représenté schématiquement un premier mode de réalisation d'un dispositif conforme à l'invention. Ce dispositif comprend un support 20, de forme et de dimensions adaptées à la structure alvéolée 10 dont les extrémités des parois des alvéoles doivent être pourvues de bourrelets de colle. Pour simplifier, on a illustré le cas d'une structure plane. Comme on le verra par la suite, ce mode de réalisation n'est pas limité à ce type de structure alvéolée et peut aussi être utilisé dans le cas de structures non planes.

Le support 20 est muni de moyens d'entraînement et de guidage, illustrés schématiquement en 22 sur la figure 2. Ces moyens d'entraînement et de guidage 22 permettent de déplacer le support 20 et la structure 10 qu'il supporte selon une trajectoire qui est, dans ce cas, sensiblement rectiligne et horizontale (flèche F1). Dans le cas d'une pièce non plane, cette trajectoire peut être sensiblement différente, comme on le comprendra mieux par la suite.

Le dispositif illustré schématiquement sur la figure 2 comprend de plus une source 24. Comme on le verra plus en détail par la suite, la source 24 comprend la source proprement dite, qui se présente par exemple sous la forme d'un ou plusieurs tubes émissifs mis bout à bout, ainsi qu'un ou plusieurs réflecteurs dirigeant le rayonnement dans la direction désirée.

Dans une variante de réalisation, la distance et l'orientation de chacun des tubes par rapport à la structure alvéolée peuvent être réglés indépendamment de celles des autres tubes, de telle sorte que la source considérée dans son ensemble a alors une forme non linéaire. Cet agencement est particulièrement avantageux dans le cas de structures alvéolaires de forme sphérique, par exemple. La source proprement dite peut également être déformable ou de forme adaptée à la forme de la pièce.

La source 24 est montée de façon fixe au-dessus du support 20 et orientée verticalement vers le bas, de façon à pouvoir émettre en direction de la structure alvéolée 10 placée sur le support 20 un rayonnement S présentant les caractéristiques définies précédemment .

Lorsque le dispositif illustré schématiquement sur la figure 2 est mis en oeuvre, la structure 10 est revêtue d'un film de colle 11 et défile sous la source 24 grâce à l'actionnement des moyens d'entraînement et de guidage 22. L'agencement est alors tel que l'écartement entre la source 24 et la partie en vis-à-vis de la structure 10 reste sensiblement constant et que le rayonnement S émis par la source est toujours sensiblement normal à ladite partie. Un asservissement de la vitesse de défilement de la structure 10 devant la source 24, de la puissance de la source et de la distance source 24 - structure 10 permet d'optimiser le fonctionnement, afin d'obtenir la température désirée pour le fluage de la colle. Comme on l'a déjà indiqué, l'exposition de la colle au rayonnement de la source doit être adaptée aux propriétés réactives de la colle. Elle peut notamment être régulée par un système d'asservissement ou en liaison avec un apprentissage préalable.

Etant donné que seule la colle est chauffée par absorption de l'énergie émise, l'inertie thermique est très faible et la structure pourvue du bourrelet de colle revient très rapidement à la température ambiante. Le cas échéant, un système de refroidissement (non représenté) peut toutefois être prévu en aval de la partie de la structure alvéolée 10 qui se trouve en face de la source 24. Ce système de refroidissement est alors, par exemple, du type à ventilation ou aspiration, et peut éventuellement être équipé d'écrans servant à canaliser l'effet de la ventilation vers la structure.

Dans une variante (non représentée) de ce premier mode de réalisation, destinée à la fabrication de petites pièces, toute la surface du film de colle placé sur la structure alvéolée 10 est chauffée par la source 24, sans qu'il soit nécessaire de déplacer cette structure. Le dispositif peut alors comprendre un support 20 également fixe.

Dans un deuxième mode de réalisation du dispositif selon l'invention, illustré schématiquement sur la figure 3, le support 20 portant la structure alvéolée 10 est fixe. Ce mode de réalisation concerne essentiellement le cas où la surface de la structure alvéolée 10 tournée vers la source 24 est plane ou sensiblement plane. C'est alors la source 24 qui se déplace au-dessus de la structure 10, selon une trajectoire telle que l'écartement entre la source et ladite structure reste sensiblement constant. La face supérieure de la structure 10 étant dans ce cas sensiblement plane et horizontale, cela signifie que la trajectoire suivie par la source 24 est rectiligne et horizontale (flèche F2).

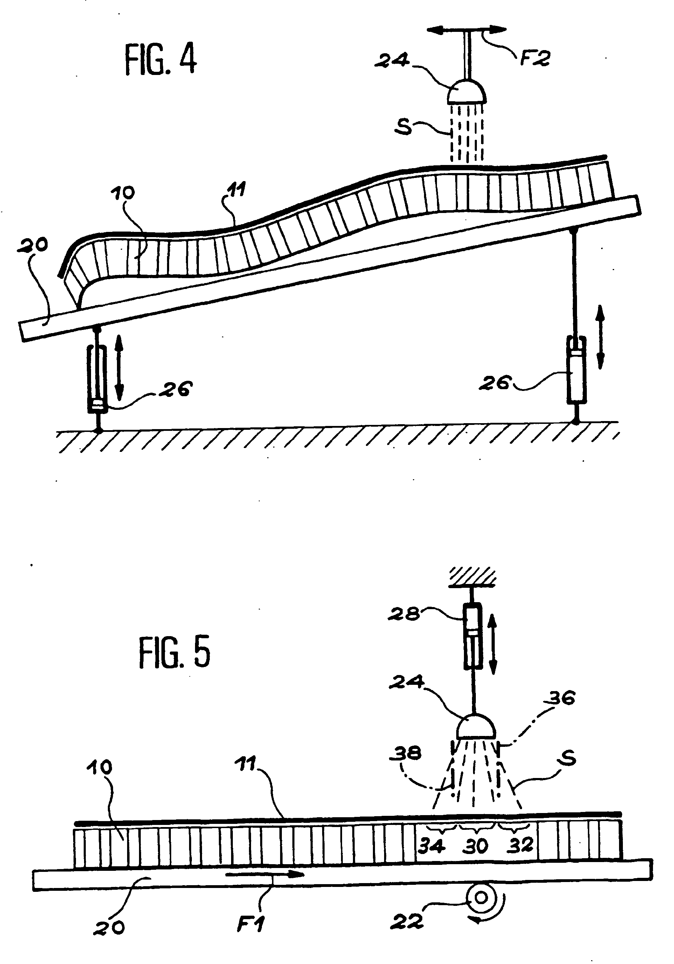

Sur la figure 4, on a représenté schématiquement un troisième mode de réalisation du dispositif selon l'invention. Ce mode de réalisation est une extension du précédent, dans le cas où la face supérieure de la structure alvéolée 10 ne serait pas plane.

Comme dans le mode de réalisation qui vient d'être décrit en référence à la figure 3, la source 24 se déplace selon une trajectoire rectiligne et horizontale (flèche F2) au-dessus de la face supérieure de la structure 10. Toutefois, au lieu d'être fixe, le support 20 sur lequel celle-ci est montée comporte des moyens d'orientation, illustrés schématiquement sous la forme de vérins 26 sur la figure 4. Ces moyens d'orientation permettent de maintenir la partie de la face supérieure de la structure 10 située en face de la source 24 dans une orientation sensiblement horizontale et à une distance sensiblement constante de la source 24. Les moyens d'orientation 26 peuvent prendre une forme quelconque permettant d'obtenir le résultat désiré. Leur mise en oeuvre est avantageusement pilotée par un système d'asservissement (non représenté) sensible aux signaux délivrés par des capteurs effectuant des mesures, telles que des mesures de température, sur la structure alvéolée.

Sur la figure 5, on a représenté schématiquement une variante du premier mode de réalisation de l'invention décrit précédemment en se référant à la figure 2. Toutefois, il est à noter que cette variante est aussi applicable aux deux autres modes de réalisation qui ont été décrits en référence aux figures 3 et 4.

La variante de réalisation de la figure 5 permet de remédier aux inconvénients découlant du fait qu'en pratique, la source 24 n'est ni parfaitement ponctuelle, ni placée au foyer d'un réflecteur parabolique parfait. Par conséquent, le faisceau du rayonnement émis par la source n'est pas parfaitement parallèle et homogène. Il existe donc, en amont et en aval de la zone 30 d'exposition souhaitée, deux zones 32 et 34 de rayonnement diffus et atténué, où la colle est exposée, mais dans une moindre mesure que dans la zone 30. Si la distance entre la source et la face supérieure de la structure alvéolée n'est pas sensiblement constante sur toute la surface de celle-ci, la quantité d'énergie absorbée et, par conséquent, la température ne seront donc pas homogènes sur toute cette surface.

Dans certaines applications, ce phénomène n'est pas pénalisant pour le bon déroulement du procédé. Les dispositifs décrits précédemment en se référant aux figures 2 à 4 peuvent alors être utilisés sans modification.

En revanche, dans certaines applications, la dispersion du rayonnement perturbe le bon déroulement du procédé. Comme on l'a représenté sous la forme de vérins 28 sur la figure 5, des moyens peuvent alors être interposés entre la source 24 et le châssis fixe du dispositif, pour permettre de faire varier à volonté la distance qui sépare la source 24 de la surface en vis-à-vis de la structure alvéolée 10. Un asservissement permet alors de déplacer verticalement la source 24, de façon à maintenir la distance précitée sensiblement constante. Cet asservissement peut notamment être piloté en réponse à des signaux délivrés par des capteurs de distance (non représentés) portés par la source et/ou de température placés à proximité de la source. On garantit ainsi l'homogénéité de l'exposition sur toute la surface de la pièce à traiter.

Dans une autre variante de réalisation illustrée en trait mixte sur la figure 5, on diminue les zones d'exposition "parasite" 32 et 34 en adjoignant à la source 24 des écrans amont 36 et aval 38. Ces écrans, qui peuvent être réflectifs ou non et parallèles ou non au faisceau de rayonnement émis par la source, ou orientés en oblique par rapport à ce faisceau, limitent la dispersion du flux. Ils sont situés à une distance convenable de la structure 10.

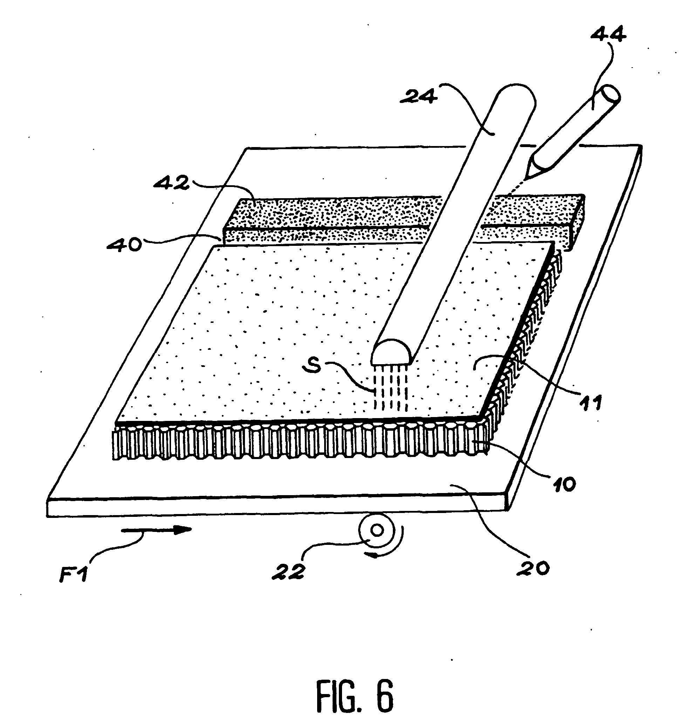

Sur la figure 6, on a représenté schématiquement un perfectionnement avantageux, bien que facultatif, du dispositif selon l'invention. Dans le cas de la figure 6, ce perfectionnement est appliqué au premier mode de réalisation décrit précédemment en référence à la figure 2. Toutefois, ce perfectionnement peut être utilisé indifféremment dans tous les modes de réalisation et variantes de l'invention.

Comme l'illustre la figure 6, le support 20 sur lequel est montée la structure alvéolée 10 comprend alors, de plus, au moins une partie latérale 40, lisse, sur laquelle on place un film de colle témoin 42, identique au film de colle 11 qui est posé sur la face supérieure de la structure 10. Une partie latérale 40 est alors disposée le long de l'un au moins des bords latéraux de la structure alvéolée, de façon à s'étendre sur toute la longueur de celle-ci, parallèlement à la direction du déplacement relatif entre le support 20 et la source 24 (sur la figure 6, cette direction correspond au déplacement du support 20 et est illustrée par la flèche F1).

La face de chaque partie latérale 40 sur laquelle est placé le film de colle témoin 42 est tournée vers la source 24. De plus, cette face est lisse et située sensiblement au même niveau que la face supérieure de la structure alvéolée 10. Chaque film de colle témoin 42 est ainsi balayé par le rayonnement émis par la source 24, dans les mêmes conditions que le film de colle 11 qui est placé sur la structure 10. La température du film de colle témoin 42 est donc représentative de la température obtenue sur le film de colle 11 recouvrant la structure alvéolée.

Comme l'illustre également la figure 6, des moyens de mesure de température, tels que, par exemple, au moins un pyromètre optique 44, sont montés à proximité de la source 24. Le pyromètre optique 44 mesure, sans contact, la température obtenue sur le film de colle témoin 42. La partie latérale 40 étant pleine, la température du film de colle témoin 42 peut être mesurée avec précision et dans de bonnes conditions, ce qui ne serait pas le cas si l'on effectuait la mesure directement sur le film de colle 11 placé sur la structure 10, en raison des trous qui se forment dans ce film par suite du fluage.

L'information de température ainsi obtenue peut être utilisée pour différents usages. Une première utilisation possible concerne le suivi, l'enregistrement et l'édition du cycle de température subi par la pièce (traçabilité). Une autre utilisation éventuelle consiste à réguler la température du film de colle en faisant varier la puissance du flux émis par la source. Enfin, il est également possible d'utiliser l'information de température pour réguler celle-ci en faisant varier au moins l'une des grandeurs constituées par la vitesse du déplacement relatif entre le support 20 et la source 24 et par la distance entre la source et la pièce.

Avantageusement, un ruban adhésif résistant à la température à laquelle est soumise la colle peut être interposé entre la partie latérale 40 et le film de colle témoin 42. Ce ruban adhésif permet alors de retirer plus facilement le film de colle témoin de la partie latérale 40, après son exposition. Il est également possible de conserver au moins un morceau du ruban adhésif recouvert de colle, pour garder une trace des conditions de fabrication de la pièce.

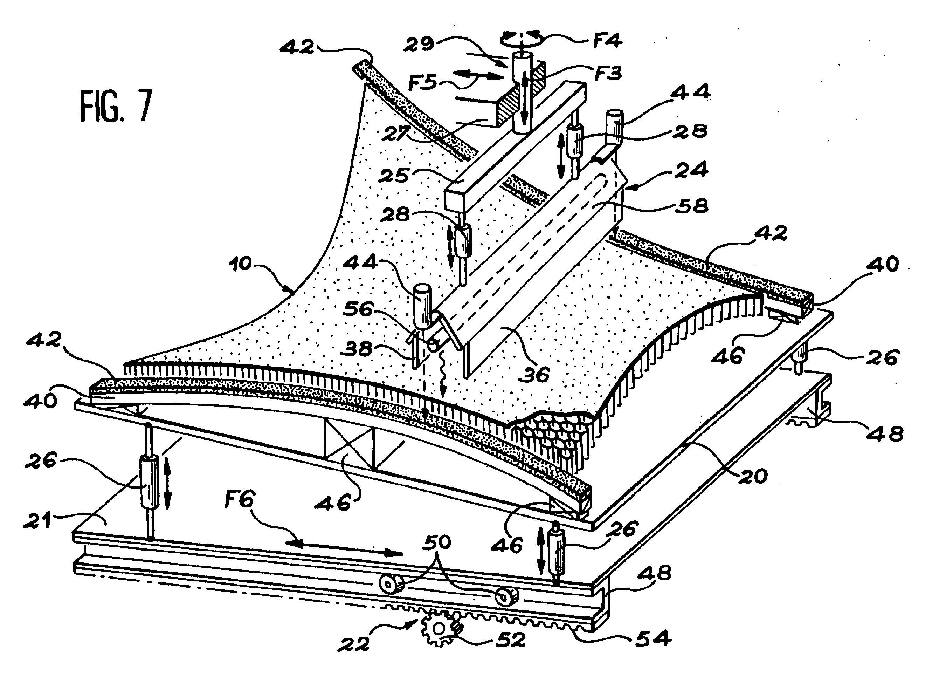

Sur la figure 7, on a représenté plus en détail un exemple de réalisation industrielle du dispositif selon l'invention. Plus précisément, cet exemple combine les modes de réalisation et variantes décrits précédemment en référence aux figures 2, 4 et 5, dans le cas où la pièce fabriquée présente une surface alvéolée non développable et non réglée.

On retrouve sur la figure 7 le support 20 sur lequel la structure alvéolée 10 est fixée par l'intermédiaire de cales 46 et de moyens de bridage conventionnels (non représentés). Les cales 46 (facultatives) permettent dans ce cas de monter sur un même support 20 des structures 10 de formes variées.

Le support 20 est lui-même porté par un châssis mobile 21, par l'intermédiaire de moyens d'orientation illustrés schématiquement sous la forme de vérins 26. La mise en oeuvre de ces moyens d'orientation permet de maintenir en permanence la partie de la face supérieure de la structure 10 exposée aux rayonnements de la source 24 dans une orientation sensiblement horizontale et à une distance sensiblement constante de la source 24.

On retrouve également sur la figure 7 les moyens d'entraînement et de guidage 22. Dans ce cas, ces moyens comprennent deux rails 48 fixés sur la face inférieure du châssis mobile 21, des galets 50 portés par le châssis fixe (non représenté) du dispositif et coopérant avec les rails 48, un pignon d'entraînement 52 en prise sur une couronne dentée 54 formée sur l'un des rails 48 et un moteur (non représenté) d'entraînement du pignon 52.

On reconnaît également sur la figure 7 la source 24. Celle-ci comprend un ou plusieurs tubes 56 formant la source proprement dite, un réflecteur parabolique 58 qui dirige vers la face supérieure de la structure 10 le rayonnement émis par le tube 56, ainsi que des écrans amont 36 et aval 38, comme décrit précédemment en référence à la figure 5.

La source 24 est reliée à une platine mobile 25 par deux vérins 28. La platine mobile 25 est elle-même montée sur un chariot mobile 27 par un mécanisme 29 autorisant un déplacement vertical (flèche F3) et une rotation (flèche F4) de ladite platine autour d'un axe vertical. Enfin, le chariot mobile 27 est monté sur le châssis fixe du dispositif de façon à pouvoir se déplacer selon une direction de translation illustrée par la flèche F5 sur la figure 7.

Le déplacement vertical (flèche F3) de la platine 25 permet de régler la distance qui sépare la source 24 de la surface de la structure 10. La mise en oeuvre des vérins 28 permet de garder une distance moyenne sensiblement constante entre la source 24 et la face supérieure de la structure alvéolée 10, lorsque ladite face n'est pas plane. La rotation (flèche F4) de la platine 25 permet d'orienter la source 24 selon les génératrices de la structure alvéolée, lorsque celle-ci est de forme complexe. Enfin, la translation du chariot 27 selon la flèche F5 permet de déplacer la source 24 sur l'ensemble de la surface de la pièce.

Dans l'agencement qui vient d'être décrit, les moyens d'entraînement et de guidage 22 permettent de déplacer la structure alvéolée 10, revêtue d'un film de colle, sous la source 24 (flèche F6), de façon à chauffer progressivement l'ensemble ainsi constitué. La présence des vérins 26 permet de présenter en position sensiblement horizontale la partie dudit ensemble située sous la zone active de la source 24. Ainsi, les cloisons des cellules sont en position sensiblement verticale lorsque le film de colle qui les recouvre est chauffé par absorption du rayonnement émis par la source.

Le dispositif représenté sur la figure 7 comprend de plus, conformément au perfectionnement décrit précédemment en référence à la figure 6, deux parties latérales lisses 40 du support 20, sur lesquelles on place un film de colle témoin 42, ainsi que deux moyens de mesure de température tels que des pyromètres optiques 44, solidaires de la source 24 et respectivement orientés vers chacune des parties latérales 40.

Dans les différents modes de réalisation décrits, on utilise un film de colle 11 non perforé.

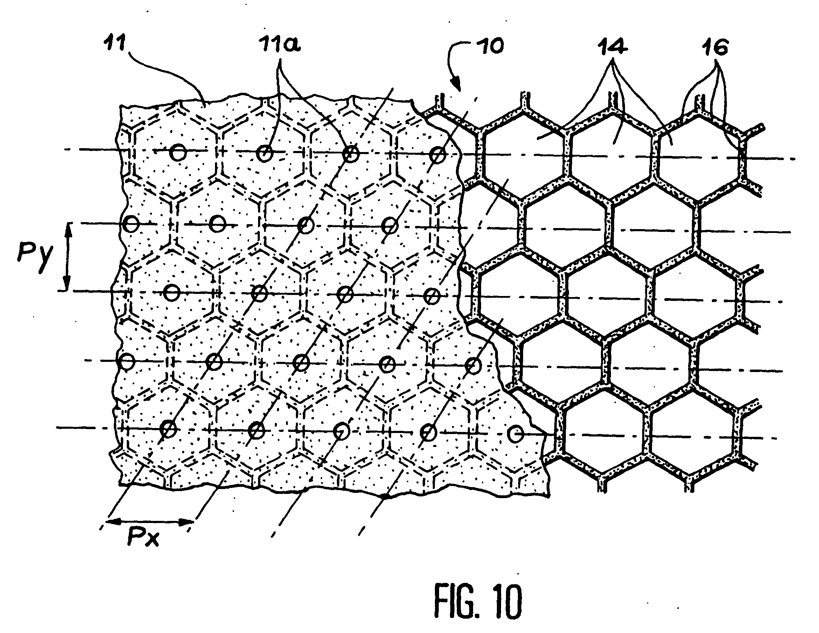

Conformément à un perfectionnement avantageux de l'invention, on utilise au contraire un film de colle 11 perforé. Ce mode de réalisation est illustré schématiquement sur la figure 10 dans le cas particulier d'une structure alvéolée 10 dont les cellules 14 forment entre elles un réseau hexagonal régulier.

Plus précisément, le film de colle 11 est perçé dans ce cas d'au moins un trou 11a en face de chacune des cellules 14 de la structure alvéolée 10. Les trous 11a sont destinés à faciliter la migration de la colle vers les extrémités des cloisons 16 des cellules 14.

Toutefois, le nombre, la disposition et les dimensions des trous 11a sont déterminés afin de faciliter l'amorçage du fluage de la colle, tout en gardant dans chacune des cellules 14 une quantité de colle suffisante pour former les bourrelets 18 (figure 1). En effet, plus les trous 11a sont de grandes dimensions, plus la quantité de colle contenue dans le film de colle est diminuée. En pratique, on obtient de bons résultats avec des trous 11a d'un diamètre moyen sensiblement égal à 1 mm, mais d'autres dimensions peuvent convenir.

Dans la pratique, les trous 11a ont une forme différente d'un cylindre de section circulaire, afin de faciliter la migration de la colle à partir des différents trous vers les extrémités des cloisons des cellules lorsque le film est chauffé. En particulier, ils sont généralement circulaires, mais présentent un diamètre non uniforme sur l'épaisseur du film de colle. A titre d'exemple non limitatif, les trous 11a peuvent notamment être de forme tronconique. L'expression "diamètre moyen" utilisée ci-dessus tient compte du fait que les trous 11a présentent, de préférence, une forme différente d'un cylindre de section circulaire.

Lorsque la structure alvéolaire 10 présente une surface à encoller sensiblement plane et des cellules 14 alignées disposées selon un réseau régulier, la présence d'au moins un trou 11a en face de chacune des cellules 14 peut être assurée en utilisant un film de colle 11 percé de trous 11a disposés selon un réseau régulier et dont le pas d'écartement correspond au pas des cellules 14 selon deux directions de la surface plane à encoller.

La figure 10 illustre cet agencement, dans le cas particulier d'une structure alvéolée 10 dont les cellules 14 sont disposées selon un réseau hexagonal régulier. Dans ce cas, les trous 11a sont disposés selon un réseau régulier, en forme de triangle, dont le pas est égal à celui du réseau formé par les cellules 14.

Dans de nombreux cas, la structure alvéolaire est souple et déformable. De plus certaines pièces à fabriquer ne sont pas planes. Tous ces agencements ont pour conséquence que les cellules 14 ne sont pas parfaitement alignées. L'utilisation d'un film de colle tel que décrit au paragraphe précédent ne permet alors pas de garantir la présence d'un trou 11a en face de chacune des cellules 14 de la structure.

Pour satisfaire aux exigences contradictoires énoncées précédemment, on utilise alors un film de colle 11 dont les trous sont disposés de façon telle que, pour une grande majorité des cellules, le nombre des trous situés en face d'elles soit inférieur ou égal à trois et au moins égal à un. En effet, un trop grand nombre de trous correspondant à une même cellule risquerait d'amener la colle à migrer de façon irrégulière sur le périmètre de l'extrémité de cette cellule, en particulier si les trous étaient localisés près des extrémités des cloisons de cette cellules.

La migration de la colle s'effectue de façon d'autant plus homogène que le ou les trous sont situés à proximité du centre de l'extrémité de la cellule considérée. En limitant le nombre des trous situés en face de chaque cellule sensiblement à trois, on garantit une bonne répartition de la colle et, par conséquent, un bon collage ultérieur de la paroi sur la structure alvéolée.

Lorsque plusieurs trous (par exemple deux ou trois) correspondent à une même extrémité de cellule, des fils de colle peuvent subsister à ladite extrémité après l'opération de fluage et de migration de la colle. Toutefois, cela n'est pas gênant car, dans une grande majorité des cas, ces fils se fluidifient, se cassent, puis la colle migre vers les bords des alvéoles lors de l'étape de polymérisation correspondant au collage de la cloison sur la structure alvéolaire.

De nombreux essais réalisés dans le cadre de ce perfectionnement ont permis de définir une disposition optimale des trous 11a, même dans le cas d'une structure déformée ou courbe. Ces essais ont été réalisés sur des structures en nid d'abeilles de marque "Eurocomposite" ou "Hexcel", comportant des cellules sensiblement hexagonales de dimensions telles que le diamètre du cercle inscrit dans chacune des cellules est sensiblement égal à 9,5 mm (soit 3/8 de pouce). Le film de colle utilisé était de type thermodurcissable, de marque "3M", référence AF191.U.

La disposition optimale des trous 11a établie grâce à ces essais correspond à celle qui est illustrée sur la figure 10. Ainsi, les trous 11a sont disposés selon deux directions qui font entre elles un angle de 60°, c'est-à-dire selon un réseau régulier à pas en forme de triangle.

Dans l'exemple chiffré considéré lors des essais, les trous 11a sont espacés entre eux d'un pas Px sensiblement égal à 7 mm selon une première direction. Selon la seconde direction, les trous 11a sont espacés entre eux de façon que la projection Py du pas qui les sépare, sur une droite perpendiculaire à la première direction soit sensiblement égale à 4,5 mm. Le résultat obtenu grâce à cette disposition est satisfaisant puisque seulement moins de trois cellules restent bouchées par le film de colle sur un panneau de plus d'un mètre carré.

Pour une structure alvéolée dont les cellules présentent des dimensions différentes, on utilisera un film de colle percé de trous agencés de façon similaire, en appliquant un facteur de proportionnalité aux valeurs du pas Px et de la distance Py données au paragraphe précédent.

## Revendications

1. Procédé pour obtenir un bourrelet de colle (18) sur les extrémités des cloisons (16) de cellules (14) débouchant sur une surface d'une structure alvéolée (10), selon lequel on dispose un film de colle (11) sur ladite surface et on expose ensuite le film de colle (11) à une source (24) émettant un rayonnement adapté à la réactivité de la colle pour ne chauffer sélectivement que celle-ci, de façon à assurer son fluage sans déclencher sensiblement sa polymérisation, **caractérisé en ce qu'**on expose le film de colle (11) à la source (24) pendant une durée et à une puissance adaptées aux propriétés réactives de la colle, et **en ce qu'**on contrôle la puissance de la source (24), la distance entre la source (24) et la structure alvéolée (10), et la vitesse de déplacement relatif entre la source (24) et la structure alvéolée (10) au moyen d'un asservissement sensible à au moins une mesure de température effectuée sur ladite structure.

2. Procédé selon la revendication 1, dans lequel on expose le film de colle (11) à la source (24) alors que la surface de la structure alvéolée (10) est tournée vers le haut.

3. Procédé selon l'une quelconque des revendications 1 et 2, dans lequel on expose le film de colle (11) à la source (24) tout en maintenant les cloisons (16) des cellules (14) sensiblement verticales.

4. Procédé selon l'une quelconque des revendications 1 à 3, dans lequel on utilise un film de colle (11) percé d'au moins un trou (11a) en face de chacune des cellules (14) de la structure alvéolée (10) .

5. Procédé selon la revendication 4, dans lequel on utilise un film de colle (11) percé de trous (11a) sensiblement circulaires, ayant un diamètre non uniforme sur l'épaisseur dudit film.

6. Procédé selon l'une quelconque des revendications 4 et 5, dans lequel, lesdites cellules (14) formant un réseau hexagonal régulier, on utilise un film de colle (11) percé de trous (11a) répartis selon un réseau régulier à pas en forme de triangle équilatéral.

7. Dispositif pour obtenir la formation de bourrelets de colle (18) sur les extrémités des cloisons (16) de cellules (14) débouchant sur une surface d'une structure alvéolée (10), ce dispositif comprenant une source (24) apte à être disposée en face de ladite surface, sur laquelle a été disposé préalablement un film de colle (11), **caractérisé en ce que** ladite source (24) est apte à émettre un rayonnement choisi pour ne chauffer sélectivement que la colle, de façon à assurer un fluage de celle-ci, sans déclencher sensiblement sa polymérisation, et un asservissement sensible à au moins une mesure de température effectuée sur ladite structure pour contrôler la puissance de la source (14), la distance entre la source (24) et la structure alvéolée (10), et la vitesse de déplacement relatif entre la source (14) et la structure alvéolée (10), de façon à exposer le film de colle (11) à la source (24) pendant une durée et une puissance adaptées aux propriétés réactives de la colle.

8. Dispositif selon la revendication 7, comprenant de plus un support (20) apte à recevoir la structure alvéolée (10), ledit support étant disposé de façon telle que ladite surface soit orientée vers le haut.

9. Dispositif selon l'une quelconque des revendications 7 et 8, dans lequel le support (20) est disposé de façon telle que les cloisons (16) des cellules (14) sont sensiblement verticales.

10. Dispositif selon l'une quelconque des revendications 7 à 9, dans lequel la source (24) est fixe et le support (20) de la structure alvéolée (10) apte à se déplacer pour faire défiler ladite surface devant la source avec un écartement sensiblement constant.

11. Dispositif selon l'une quelconque des revendications 7 à 9, dans lequel le support (10) est fixe et la source (24) apte à se déplacer parallèlement à ladite surface de la structure alvéolée (10).

12. Dispositif selon l'une quelconque des revendications 8 et 9, appliqué au cas où ladite surface est non plane, dans lequel le support (20) est orientable et la source (24) apte à se déplacer en face de ladite surface selon une trajectoire présentant un écartement sensiblement constant par rapport à celle-ci.

13. Dispositif selon l'une quelconque des revendications 10 à 12, dans lequel la source (24) est apte à se déplacer selon une direction sensiblement normale à ladite surface.

14. Dispositif selon l'une quelconque des revendications 10 à 13, dans lequel des écrans amont et aval (36, 38) sont associés à la source (24), de façon à limiter la dispersion du flux émis par celle-ci.

15. Dispositif selon l'une quelconque des revendications 8 à 14, dans lequel le support (20) comprend au moins une partie latérale lisse (40), dépourvue de structure alvéolée, apte à recevoir directement un film de colle témoin (42) identique au film de colle (11) placé sur ladite structure (10), des moyens de mesure de température (44) étant placés en face de ladite partie latérale lisse (40).

16. Dispositif selon la revendication 15, dans lequel un ruban adhésif résistant à la température est placé sur la partie latérale lisse (40), pour recevoir le film de colle témoin (42).

## Patentansprüche

1. Verfahren zur Herstellung eines Klebstoffwulstes (18) an den Enden von Trennwänden (16) von Zellen (14), die in eine Oberfläche einer Zellstruktur (10) münden, wobei eine Klebstoffschicht (11) auf die Oberfläche aufgebracht wird und anschließend die Klebstoffschicht (11) einer eine der Reaktivität des Klebstoffs angepasste Strahlung emittierenden Quelle (24) ausgesetzt wird, um nur diesen selektiv derart zu erwärmen, dass sein Verfließen gewährleistet ist, ohne im wesentlichen seine Polymerisierung auszulösen, **dadurch gekennzeichnet, dass** die Klebstoffschicht (11) der Quelle (24) während einer Dauer und mit einer Stärke ausgesetzt wird, die den reaktiven Eigenschaften des Klebestoffs angepasst sind, und die Strahlungsstärke der Quelle (24), der Abstand zwischen der Quelle (24) und der Zellstruktur (10) und die relative Bewegungsgeschwindigkeit zwischen der Quelle (24) und der Zellstruktur (10) mittels einer Servosteuerung gesteuert wird, die mindestens auf eine an der Struktur durchgeführte Temperaturmessung anspricht.

2. Verfahren nach Anspruch 1, wobei die Klebstoffschicht (11) der Quelle (24) ausgesetzt wird, während die Oberfläche der Zellstruktur (10) nach oben gewandt ist.

3. Verfahren nach einem der Ansprüche 1 oder 2, wobei die Klebstoffschicht (11) der Quelle (24) ausgesetzt wird und dabei die Trennwände (16) der Zellen (14) im wesentlichen vertikal gehalten werden.

4. Verfahren nach einem der Ansprüche 1 bis 3, wobei eine Klebstoffschicht (11) verwendet wird, die von mindestens einem Loch (11a) gegenüber jeder der Zellen (14) der Zellstruktur (10) durchsetzt ist.

5. Verfahren nach Anspruch 4, wobei eine Klebstoffschicht (11) verwendet wird, die von im wesentlichen kreisförmigen Löchern (11a) mit einem nicht-gleichmäßigen Durchmesser über der Dicke der Schicht durchsetzt ist.

6. Verfahren nach einem der Ansprüche 4 oder 5, wobei die Zellen (14) ein regelmäßiges sechseckiges Netz bilden und eine Klebstoffschicht (11) verwendet wird, die von Löchern (11a) durchsetzt ist, welche gemäß einem regelmäßigen Netz mit einer Teilung in Form eines gleichseitigen Dreiecks verteilt sind.

7. Vorrichtung zur Ausbildung von Klebstoffwülsten (18) an den Enden von Trennwänden (16) von in eine Oberfläche einer Zellstruktur (10) mündenden Zellen (14), wobei diese Vorrichtung eine Quelle (24) umfasst, die gegenüber der Oberfläche angeordnet werden kann, auf der vorab eine Klebstoffschicht (11) aufgebracht wurde, **dadurch gekennzeichnet, dass** die Quelle (24) eine Strahlung emittieren kann, die so gewählt ist, dass nur der Klebstoff selektiv erwärmt wird, so dass ein Verfließen desselben gewährleistet ist, ohne im wesentlichen seine Polymerisierung auszulösen, und eine Servosteuerung, die mindestens auf eine an der Struktur vorgenommene Temperaturmessung anspricht, um die Strahlungsstärke der Quelle (24), den Abstand zwischen der Quelle (24) und der Zellstruktur (10) sowie die relative Bewegungsgeschwindigkeit zwischen der Quelle (14) und der Zellstruktur (10) derart zu steuern, dass die Klebstoffschicht (11) der Quelle (24) während einer Zeitdauer und mit einer Stärke ausgesetzt ist, die an die reaktiven Eigenschaften des Klebstoffs angepasst sind.

8. Vorrichtung nach Anspruch 7, außerdem mit einem Träger (20), der die Zellstruktur (10) aufnehmen kann, wobei der Träger derart angeordnet ist, dass die Oberfläche nach oben ausgerichtet ist.

9. Vorrichtung nach einem der Ansprüche 7 oder 8, wobei der Träger (20) derart angeordnet ist, dass die Trennwände (16) der Zellen (14) im wesentlichen vertikal sind.

10. Vorrichtung nach einem der Ansprüche 7 bis 9, wobei die Quelle (24) feststehend ist und der Träger (20) der Zellstruktur (10) sich bewegen kann, um die genannte Oberfläche vor der Quelle mit einem im wesentlichen konstanten Abstand passieren zu lassen.

11. Vorrichtung nach einem der Ansprüche 7 bis 9, wobei der Träger (10) feststehend ist und die Quelle (24) sich parallel zu der Oberfläche der Zellstruktur (10) bewegen kann.

12. Vorrichtung nach einem der Ansprüche 8 oder 9, angewandt auf einen Fall, bei dem die Oberfläche nicht-plan ist, wobei der Träger (20) orientierbar ist und die Quelle (24) sich gegenüber der Oberfläche in einer Bewegungsbahn bewegen kann, die einen im wesentlichen konstanten Abstand in bezug auf diese aufweist.

13. Vorrichtung nach einem der Ansprüche 10 bis 12, wobei die Quelle (24) sich in einer zu der Oberfläche im wesentlichen senkrechten Richtung bewegen kann.

14. Vorrichtung nach einem der Ansprüche 10 bis 13, wobei stromaufwärtige und stromabwärtige Abschirmungen bzw. Schutzabdeckungen (36,38) der Quelle (24) zugeordnet sind, so dass sie die Streuung des von dieser emittierten Energieflusses begrenzen.

15. Vorrichtung nach einem der Ansprüche 8 bis 14, wobei der Träger (20) mindestens einen lateralen glatten Abschnitt (40) umfasst, der keine Zellstruktur aufweist und direkt eine Bezugs-Klebstoffschicht (film de colle temoin) (42) aufnehmen kann, die identisch mit der auf die Struktur (10) aufgebrachten Klebstoffschicht (11) ist, wobei Temperaturmessmittel (44) gegenüber dem glatten lateralen Abschnitt (40) angeordnet sind.

16. Vorrichtung nach Anspruch 15, wobei ein temperaturbeständiges Klebeband auf dem glatten lateralen Abschnitt (40) angebracht wird, um die Bezugs-Klebstoffschicht (42) aufzunehmen.

## Claims

1. Process to obtain a glue bead (18) on the ends of the partitions (16) of cells (14) opening up onto the surface of a cellular structure (10), in which a glue film (11) is applied on the said surface, and the glue film (11) is then exposed to a source (24) emitting radiation adapted to the reactivity of the glue to only heat it selectively so that it creeps without significantly triggering its polymerisation, **characterized in that** the glue film (11) is exposed to the source (24) for a time and at a power adapted to the reactive properties of the glue, and **in that** the power of the source (24), the distance between the source (24) and the honeycomb structure (10) and the relative displacement speed between the source (24) and the honeycomb structure (10) are controlled by a servo control sensitive to at least one temperature measurement performed on said structure.

2. Process according to claim 1, in which the glue film (11) is exposed to the source (24) while the surface of the cellular structure (10) is facing upwards.

3. Process according to either of claims 1 and 2, in which the glue film (11) is exposed to the source (24) while keeping the partitions (16) of the cells (14) approximately vertical.

4. Process according to any one of claims 1 to 3, in which a glue film (11) is used in which at least one hole (11a) is perforated facing each of the cells (14) of the cellular structure (10).

5. Process according to claim 4, in which a glue film (11) is used in which approximately circular holes (11a) are formed, with a non-uniform diameter over the thickness of the said film.

6. Process according to either of claims 4 and 5, in which the said cells (14) forming a regular hexagonal network, and a glue film (11) is used in which holes (11a) are formed distributed along a regular network with a triangular shaped pitch.

7. Device to obtain the formation of glue strips (18) on the ends of the partitions (16) of cells (14) opening onto the surface of a cellular structure (10), said device comprising a source (24) that may be placed facing the said surface, on which a glue film (11) has been deposited in advance, **characterized in that** said source (24) is capable of emitting radiation chosen to heat the glue only selectively, so that it creeps without significantly triggering its polymerisation, and a servo control sensitive to at least one temperature measurement performed on said structure in order to control the power of the source (14), the distance between the source (24) and the honeycomb structure (10) and the relative displacement speed between the source (14) and the honeycomb structure (10), so as to expose the glue film (11) to the source (24) for a time and at a power adapted to the reactive properties of the glue.

8. Device according to claim 7, also comprising a support (20) on which the cellular structure (10) will be added, the said structure being arranged such that the said surface is facing upwards.

9. Device according to either of claims 7 and 8, in which the structure (20) is arranged such that the partitions (16) of the cells (14) are substantially vertical.

10. Device according to any one of claims 7 to 9, in which the source (24) is fixed and the support (20) of the cellular structure (10) moves to make the said surface move in front of the source with a substantially constant spacing.

11. Device according to any one of claims 7 to 9, in which the support (10) is fixed and the source (24) is capable of moving parallel to the said surface of the cellular structure (10).

12. Device according to either of claims 8 and 9, applicable when the said surface is not planar, in which the support (20) can be rotated and the source (24) can be displaced facing the said surface among the trajectory and with a substantially constant spacing from it.

13. Device according to any one of claims 10 to 12, in which the source (24) is capable of moving along a direction substantially normal to the said surface.

14. Device according to any one of claims 10 to 13, in which the upstream and downstream screens (36, 38) are associated with the source (24) in order to limit dispersion of flux emitted by the source.

15. Device according to any one of claims 8 to 14, in which the support (20) comprises at least one smooth side part (40) without any cellular structure, on which a control glue film (42) can be applied identical to the glue film (11) placed on the said structure (10), temperature measurement means (44) being placed facing the said smooth lateral part (40).

16. Device according to claim 15, in which an adhesive tape resistant to temperature is placed on the smooth side part (40), on which the control glue film (42) will be applied.
